# EUROPÄISCHE PATENTSCHRIFT

(11) **EP 1 594 206 B1**
(45) Veröffentlichungstag und Bekanntmachung des Hinweises auf die Patenterteilung: **30.12.2009**
(21) Anmeldenummer: 04010844.1
(22) Anmeldetag: 06.05.2004
(51) Int. Cl.: H02H 1/00, H02J 13/00

(54) **Vorrichtung zur Ermittlung von Informationen über den Zustand eines elektrischen Verbrauchers**
Apparatus for providing informations about the state of an electrical consumer
Appareil fournissant des informations sur l'état d'un consommateur électrique

(43) Veröffentlichungstag der Anmeldung: 09.11.2005
(73) Patentinhaber: SIEMENS AKTIENGESELLSCHAFT, 80333 München (DE)
(72) Erfinder: Möhler, Harald, 90409 Nürnberg (DE)

(56) Entgegenhaltungen:
- WO-A-01/15300
- US-A- 4 979 066
- US-A- 5 835 324
- US-A1- 2003 115 510
- US-A1- 2004 000 909
- PATENT ABSTRACTS OF JAPAN Bd. 2000, Nr. 15, 6. April 2001 (2001-04-06) & JP 2000 350350 A (HITACHI LTD), 15. Dezember 2000 (2000-12-15)

## Beschreibung

Vorrichtung zur Ermittlung von Informationen über den Zustand eines elektrischen Verbrauchers

Die Erfindung betrifft eine Vorrichtung zur Ermittlung von Informationen über den Zustand eines elektrischen Verbrauchers.

Im Allgemeinen zeigt sich der Verschleiß an Schneidwerkzeugen, beispielsweise Drehmeißeln, Sägen, Bohrern, Fräsen oder Stanzen, durch einen unsauberen Schnitt oder erst durch einen Bruch des jeweiligen Werkzeugs. Liegen elektrische Verbraucher vor, die mit diesen Werkzeugen verbunden sind, dann lassen sich derartige Ausfälle beispielsweise unter Verwendung eines Strom-Zeit-Diagrammes vorhersehen. Bei Pumpen und Ventilen zeigt sich der Verschleiß durch eine erhöhte Leistungsaufnahme. Fluidiksysteme benötigen beim Auftreten eines Verschleißes eine erhöhte Pumpleistung.

Um den Verschleiß eines elektrischen Verbrauchers rechtzeitig zu erkennen und Schäden, die durch einen Verschleiß oder Ausfall eines elektrischen Verbrauchers entstehen können, zu vermeiden, wird bei modernen Anlagen, welche elektrische Verbraucher enthalten, regelmäßig ein Service durchgeführt. Im Rahmen dieses Services werden Wartungsarbeiten an den elektrischen Verbrauchern vorgenommen. Ferner erfolgt nach Ablauf einer vorgegebenen Betriebszeit ein präventiver Austausch von elektrischen Verbrauchern. Durch diese Services wird erreicht, dass der Zeitpunkt eines Anlagenstillstandes planbar ist und dass im nachfolgenden Betrieb die elektrischen Verbraucher komplett und in der erforderlichen Qualität zur Verfügung stehen.

Bei besonderen Applikationen ist es bereits bekannt, mit speziellen Baugruppen den Stromverbrauch einer Anlage zu überwachen und im Falle einer auffälligen Veränderung des Stromverbrauchs Bearbeitungselemente der Anlage auszutauschen.

Aus der US 5,835,324 A ist eine programmierbare elektronische Sicherungsbox mit einem Eingabepad bekannt, die keine Sicherungselemente benötigt. Bei dieser bekannten Vorrichtung ist eine Stromversorgung mit einer Leistungsschaltereinheit verbunden, die ihrerseits über eine Messvorrichtung mit elektrischen Verbrauchern verbunden ist. Die Messvorrichtung und die Leistungsschaltereinheit sind jeweils über eine Leitung mit einer CPU verbunden. Die CPU ist dazu vorgesehen, anhand der ihr von der Messvorrichtung zugeführten Daten Überlastzustände angeschlossener Verbraucher zu detektieren und im Falle einer Detektion derartiger Überlastzustände einen oder mehrere Schalter der Leistungsschaltereinheit zu öffnen.

Aus der JP 2000350350 ist eine Schutzrelaisvorrichtung bekannt, welche eine Selbstdiagnoseeinheit enthält. Diese Selbstdiagnoseeinheit ist dazu vorgesehen, in der Schutzrelaisvorrichtung auftretende Fehler zu detektieren.

Die Aufgabe der Erfindung besteht darin, eine Vorrichtung anzugeben, mittels welcher die Notwendigkeit eines verschleißbedingten Austauschs von elektrischen Verbrauchern und/oder mit diesen verbundenen mechanischen Werkzeugen, Vorrichtungen oder Anlagenteilen sicher erkannt werden kann.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass in einer elektronischen Sicherung ohnehin vorliegende Messwerte in einer an die elektronische Sicherung angeschlossenen Prognostikeinheit als Indikator für notwendige Wartungsarbeiten oder einen notwendigen Austausch eines Verbrauchers oder mit diesem verbundener Werkzeuge, Vorrichtungen oder Anlagenteile verwendet werden können. In vorteilhafter Weise handelt es sich bei der elektronischen Sicherung um eine selbstlernende elektronische Sicherung, die sich ihre Referenz, die sie im Falle einer unzulässigen Abweichung eines zu überwachenden Parameters zur Auslösung der Abschaltung des angeschlossenen Verbrauchers benötigt, selbst ermittelt.

Die Prognostikeinheit, bei der es sich beispielsweise um einen Personalcomputer handelt, weist einen Datenbankspeicher auf, der mehrere Speicherbereiche hat. In einem dieser Speicherbereiche sind Referenzen abgespeichert, die die Notwendigkeit von Servicemaßnahmen betreffen. Unter Verwendung dieser Referenzen können Alterungsprozesse, die langsam ablaufen, überwacht werden. Überschreiten die von der elektronischen Sicherung abgeleiteten Messwerte oder daraus ermittelte Rechengrößen die genannten Referenzen, dann können erforderliche Maßnahmen in die Wege geleitet werden.

Eine Ausführungsform besteht darin, die Referenzen und die Messwerte bzw. die aus den Messwerten abgeleiteten Rechengrößen in Form eines Diagrammes auf einem Display der Diagnostikeinheit zu visualisieren. Anhand dieses Diagrammes erkennt das Servicepersonal, ob der oder die an die elektronische Sicherung angeschlossenen Verbraucher und die mit diesen verbundenen mechanischen Werkzeugen, Vorrichtungen oder Anlagenteile normal arbeiten oder aufgrund von Alterungs- bzw. Abnutzungsprozessen reparatur- oder austauschbedürftig sind, und leitet ggf. die erforderlichen Maßnahmen ein.

Eine andere Ausführungsform besteht darin, die Referenzen und die Messwerte bzw. die aus den Messwerten abgeleiteten Rechengrößen unter Verwendung eines abgespeicherten Rechenprogrammes miteinander zu vergleichen und dann, wenn die Messwerte bzw. die aus diesen abgeleiteten Rechengrößen ein erlaubtes Toleranzintervall verlassen, in alphanumerischer und/oder grafischer Form Warnmeldungen bzw. Wartungshinweise auf dem Display der Prognostikeinheit anzuzeigen.

Vorzugsweise weist die elektronische Sicherung einen Messwertspeicher auf, in welchem die von einer Detektoreinheit der elektronischen Sicherung ermittelten Messwerte zwischengespeichert werden. Von diesem Speicher aus können die Messwerte in vorgegebenen Zeitintervallen oder nach einem Abruf durch die Diagnostikeinheit über den Kommunikationskanal an die Diagnostikeinheit übertragen werden.

Gemäß einer Ausführungsform der Erfindung gehört der Verbraucher einer Anlage an, die eine Vielzahl von Verbrauchern und mehrere elektronische Sicherungen enthält. Bei dieser Ausführungsform sind die elektronischen Sicherungen über einen Konzentrator mit der Diagnostikeinheit verbunden. Derartige Anlagen werden beispielsweise in der Fertigungstechnik und der Automatisierungstechnik eingesetzt. Bei den Verbrauchern kann es sich um Sensoren, elektronische Steuerungen, Pumpen und Ventile handeln, die eine Versorgungsgleichspannung benötigen.

Weitere vorteilhafte Eigenschaften der Erfindung ergeben sich aus deren beispielhafter Erläuterung anhand der Zeichnungen. Es zeigt:
- Figur 1: eine Skizze eines ersten Ausführungsbeispiels für eine Vorrichtung zur Ermittlung von Informationen über den Zustand eines elektrischen Verbrauchers und eines mit diesem verbundenen Werkzeugs,
- Figur 2: eine Skizze eines zweiten Ausführungsbeispiels für eine Vorrichtung zur Ermittlung von Informationen über den Zustand eines elektrischen Verbrauchers und eines mit diesem verbundenen Werkzeugs,
- Figur 3: eine Skizze eines dritten Ausführungsbeispiels für eine Vorrichtung zur Ermittlung von Informationen über den Zustand eines elektrischen Verbrauchers und eines mit diesem verbundenen Werkzeugs, und
- Figur 4: ein Diagramm zur Veranschaulichung einer Anzeige auf dem Display der Prognostikeinheit.

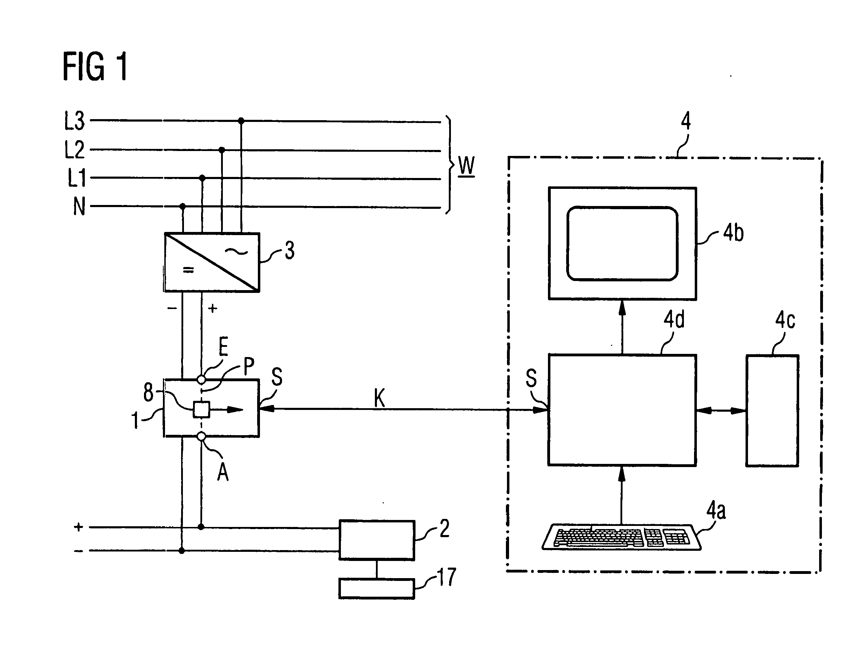

Die Figur 1 zeigt eine Skizze eines ersten Ausführungsbeispiels für eine Vorrichtung zur Ermittlung von Informationen über den Zustand eines elektrischen Verbrauchers und eines mit diesem verbundenen Werkzeugs. Bei diesem Ausführungsbeispiel ist ein elektrischer Verbraucher 2 über eine elektronische Sicherung 1 an eine Stromversorgung 3 angeschlossen, die mit dem Wechselstromnetz W in Verbindung steht. Der Verbraucher 2 ist mit einem Werkzeug 17, beispielsweise einer Säge, einer Vorrichtung, beispielsweise einer Bearbeitungsanlage, oder einem Anlageteil, beispielsweise einer Roboterhand, verbunden. Bei der weiteren Erläuterung der Erfindung wird stets davon ausgegangen, dass der Verbraucher mit einem Werkzeug verbunden ist.

Die elektronische Sicherung 1 ist eine selbstlernende elektronische Sicherung, die in Form eines einkanaligen Einzelgerätes realisiert ist. Sie ist im Versorgungspfad des Verbrauchers 2 zwischen der Stromversorgung 3 und dem Verbraucher 2 angeordnet. Bei der an das Wechselstromnetz W angeschlossenen Stromversorgung 3 handelt es sich um ein Netzgerät oder einen Gleichrichter, der an seinem Ausgang die vom Verbraucher 2 benötigte Versorgungsgleichspannung zur Verfügung stellt. Das Wechselstromnetz W weist drei Phasenleiter L1, L2, L3 sowie einen Nullleiter N auf.

Die von der Stromversorgung 3 bereitgestellte Versorgungsgleichspannung wird über eine Plusleitung + und eine Masseleitung - an die selbstlernende elektronische Sicherung 1 angelegt. Vom Eingang E der Sicherung 1 führt ein Versorgungspfad P über eine Detektoreinheit 8 an einen Versorgungsausgang A der Sicherung 1. Mittels der an diesem Versorgungsausgang vorliegenden Versorgungsgleichspannung wird der Verbraucher 2 versorgt.

Weiterhin ist die selbstlernende elektronische Sicherung 1 über ihre Schnittstelle S und einen Kommunikationskanal K mit einer Prognostikeinheit 4 verbunden. Bei dieser Prognostikeinheit 4 handelt es sich um einen Personalcomputer, der eine Tastatur 4a, ein Display 4b, einen Datenbankspeicher 4c und eine Rechen- und Steuereinheit 4d aufweist. Über den Kommunikationskanal K werden mittels der Detektoreinheit 8 ermittelte Messwerte an die Prognostikeinheit 4 übertragen. Diese leitet aus den genannten Messwerten Daten ab, die Informationen über den Zustand des an die Sicherung 1 angeschlossenen elektrischen Verbrauchers 2 und das an diesen angeschlossene Werkzeug geben. Zu diesem Zweck sind in einem Speicherbereich des Datenbankspeichers 4c Referenzen abgespeichert, die die Notwendigkeit von Servicemaßnahmen betreffen. Bei diesen Referenzen handelt es sich beispielsweise um einen Minimalwert und einen Maximalwert für einen zu überwachenden Parameter. Die Recheneinheit 4d überprüft, ob die über den Kommunikationskanal angelieferten Messwerte des zu überwachenden Parameters zwischen dem Minimalwert und dem Maximalwert liegen. Solange dies der Fall ist, arbeitet der Verbraucher 2 und das an diesen angeschlossenen Werkzeug ordnungsgemäß und ist in gutem Zustand. Verlassen hingegen die angelieferten Messwerte den durch den Minimalwert und den Maximalwert definierten Toleranzbereich, dann erkennt die Recheneinheit 4d, dass der Verbraucher 2 oder das Werkzeug 17 aufgrund von Alterung und/oder Verschleiß reparatur- oder austauschbedürftig ist und signalisiert dies dem Servicepersonal durch eine alphanumerische oder grafische Anzeige auf dem Display 4b. Das Servicepersonal leitet als Reaktion auf diese Anzeige die erforderlichen Maßnahmen ein.

Der genannte Toleranzbereich, der durch den Minimalwert und den Maximalwert definiert ist, beruht auf Beziehungswissen zwischen dem Abschaltverhalten des elektrischen Verbrauchers und dem Verschleiß des mit ihm verbundenen Werkzeugs. Ist dieser Verschleiß bis zu einem bestimmten Grad fortgeschritten, dann zeigt sich dies in den von der Detektoreinheit 8 gelieferten Messwerten. Die Recheneinheit 4d erkennt den Fortschritt des Verschleißes und damit den bevorstehenden Ausfall des Werkzeugs, so dass rechtzeitig geeignete Gegenmaßnahmen ergriffen werden können.

Die Einspeicherung des Minimalwertes und des Maximalwertes für den zu überwachenden Parameter in den Datenbankspeicher 4c erfolgt mittels der Tastatur 4a der Prognostikeinheit 4.

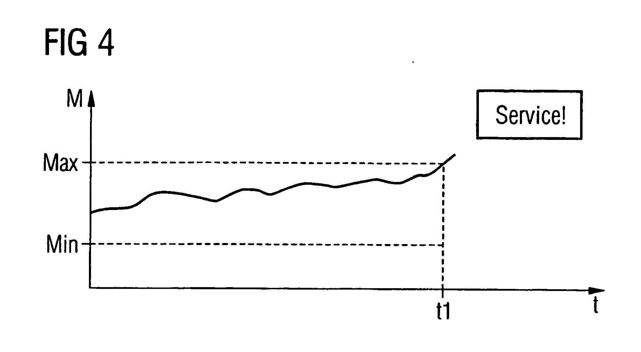

Gemäß einer vorteilhaften Ausführungsform der Erfindung erfolgt auf dem Display 4b eine Anzeige eines Diagrammes, in welchem der zeitliche Verlauf der angelieferten Messwerte sowie der vorgegebene Minimalwert und der vorgegebene Maximalwert veranschaulicht sind. Ein Beispiel für eine derartige Anzeige ist in der Figur 4 dargestellt. Dabei sind auf der Abszisse die Zeit t und auf der Ordinate die Messwerte M aufgetragen. Aus dem zeitlichen Verlauf der durch die Messwerte gegebenen Kurve ist ersichtlich, dass die Messwerte bis zum Zeitpunkt t1 innerhalb des durch einen Minimalwert Min und einen Maximalwert Max definierten Toleranzintervalles liegen und zum Zeitpunkt t1 dieses Toleranzintervall verlassen. Dieses Verlassen des Toleranzintervalles wird als Indikator dafür angesehen, dass der Verbraucher 2 oder das Werkzeug 17 aufgrund von Alterung und/oder Verschleiß überprüft, gewartet und ggf. ausgetauscht werden muss, was dem Servicepersonal durch die Einblendung des Schriftzuges "SERVICE!" auf dem Display 4b signalisiert wird.

Vorzugsweise werden die von der elektronischen Sicherung 1 zur Prognostikeinheit 4 übertragenen Messwerte in einem weiteren Speicherbereich des Datenbankspeichers 4c archiviert. Dadurch wird die Möglichkeit geschaffen, zu einem späteren Zeitpunkt - beispielsweise zum Zwecke einer genaueren Analyse der Anlage - auf diese Messwerte zurückgreifen zu können. Kommt es beispielsweise bei Anlagen, die eine Vielzahl von elektronischen Sicherungen und eine Vielzahl von Verbrauchern aufweisen, zu unzureichenden Arbeitsergebnissen der Anlage, obwohl alle Verbraucher innerhalb der jeweiligen Toleranzbereiche arbeiten, dann könnte die Ursache für die unzureichenden Arbeitsergebnisse darin bestehen, dass mehrere dieser Verbraucher in unmittelbarer Nähe des Randes des jeweiligen Toleranzbereiches arbeiten und dadurch eine Summierung kleinerer Arbeitsungenauigkeiten auftritt, die in ihrer Gesamtheit zu einem nicht akzeptablen Arbeitsergebnis führen. Dies kann anhand der archivierten Messwerte erkannt werden. Als Gegenmaßnahme bietet sich in einem derartigen Fall eine Verkleinerung der Toleranzbereiche an, so dass zukünftig eine frühere Wartung bzw. ein früherer Austausch von Verbrauchern oder mit diesen verbundenen Werkzeugen, Vorrichtungen oder Anlagenteilen erfolgt.

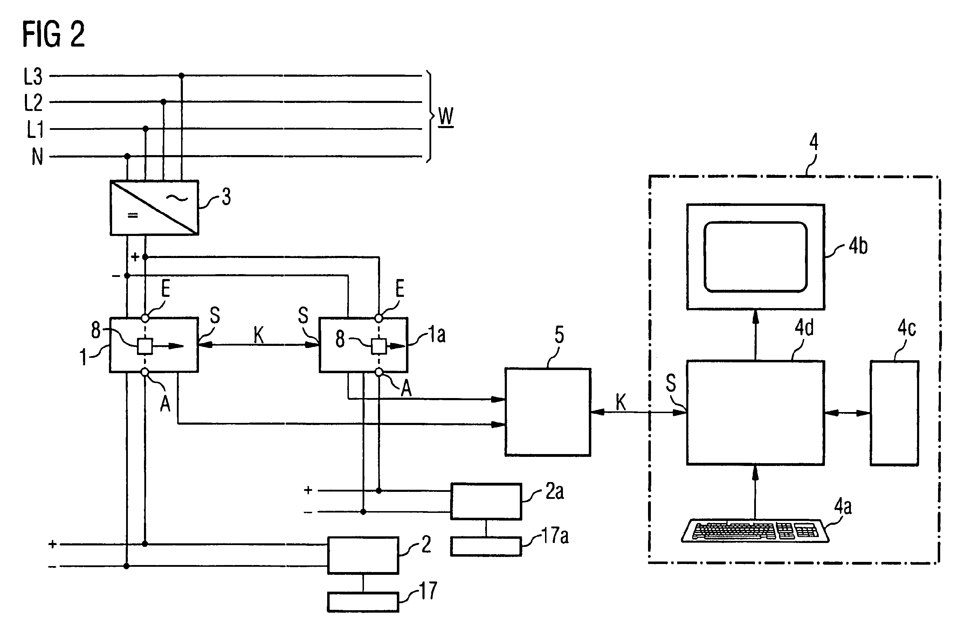

Die Figur 2 zeigt eine Skizze eines zweiten Ausführungsbeispiels für eine Vorrichtung zur Ermittlung von Informationen über den Zustand eines elektrischen Verbrauchers und eines mit diesem verbundenen Werkzeugs. Bei diesem Ausführungsbeispiel sind zwei als einkanalige Einzelgeräte realisierte selbstlernende elektronische Sicherungen 1 und 1a vorgesehen. Die Sicherung 1 ist im Versorgungspfad eines Verbrauchers 2 zwischen einer Stromversorgung 3 und dem Verbraucher 2 angeordnet. Die Sicherung 1a befindet sich im Versorgungspfad eines Verbrauchers 2a zwischen der Stromversorgung 3 und dem Verbraucher 2a. Der Verbraucher 2 ist mit einem Werkzeug 17 und der Verbraucher 2a mit einem Werkzeug 17a verbunden. Die Stromversorgung 3 ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um ein Netzgerät bzw. eine Gleichrichtereinheit, die an ihrem Ausgang die von den Verbrauchern 2 und 2a benötigte Versorgungsgleichspannung zur Verfügung stellt. Diese wird jeweils über eine Plusleitung + und eine Masseleitung - an die selbstlernenden Sicherungen 1 und 1a und von diesen aus an die Verbraucher 2 und 2a weitergegeben. Die selbstlernenden elektronischen Sicherungen 1 und 1a sind weiterhin jeweils mit einem Konzentrator 5 verbunden. Dieser ist dazu vorgesehen, die von einer Detektoreinheit 8 der jeweiligen Sicherung ermittelten Messsignale zu sammeln und dann über einen Kommunikationskanal K an eine Prognostikeinheit 4 zu übertragen. Weiterhin ist auch zwischen den Sicherungen 1 und 1a ein Kommunikationskanal K vorgesehen. Über diesen können in der Sicherung 1 vorliegende Daten an die Sicherung 1a übertragen werden und umgekehrt.

Die Sicherung 1 ist dazu vorgesehen, im Falle einer unzulässigen Abweichung eines im Versorgungspfad zum Verbraucher 2 zu überwachenden Parameters auszulösen, d. h. den Versorgungspfad zum Verbraucher 2 zu unterbrechen. Die Sicherung 1a dient dazu, im Falle einer unzulässigen Abweichung eines im Versorgungspfad zum Verbraucher 2a zu überwachenden Parameters auszulösen, d. h. den Versorgungspfad zum Verbraucher 2a zu unterbrechen.

Bei der Prognostikeinheit 4 handelt es sich um einen Personalcomputer, der eine Tastatur 4a, ein Display 4b, einen Datenbankspeicher 4c und eine Rechen- und Steuereinheit 4d aufweist. Die Prognostikeinheit 4 leitet aus den ihr über den Kommunikationskanal K zugeleiteten Messwerten Daten ab, die Informationen über den Zustand der an die Sicherungen 1 und 1a angeschlossenen elektrischen Verbraucher 2 und 2a und der davon angeschlossenen Werkzeuge geben. Zu diesem Zweck sind in einem Speicherbereich des Datenbankspeichers 4c Referenzen abgespeichert, die die Notwendigkeit von Servicemaßnahmen betreffen. Bei diesen Referenzen handelt es sich beispielsweise um einen Minimalwert und einen Maximalwert für einen zu überwachenden Parameter. Die Recheneinheit 4d überprüft, ob die über den Kommunikationskanal angelieferten Messwerte des zu überwachenden Parameters zwischen dem Minimalwert und dem Maximalwert liegen. Solange dies der Fall ist, arbeiten der Verbraucher 2 bzw. 2a und die daran angeschlossenen Werkzeuge ordnungsgemäß und sind in gutem Zustand.

Verlassen hingegen die angelieferten Messwerte den durch den Minimalwert und den Maximalwert definierten Toleranzbereich, dann erkennt die Recheneinheit 4d, dass der Verbraucher 2 bzw. 2a oder das jeweils zugehörige Werkzeug aufgrund von Alterung und/oder Verschleiß reparatur- oder austauschbedürftig ist und signalisiert dies dem Servicepersonal durch eine alphanumerische oder grafische Anzeige auf dem Display 4b. Das Servicepersonal leitet als Reaktion auf diese Anzeige die erforderlichen Maßnahmen ein.

Der genannte Toleranzbereich, der durch den Minimalwert und den Maximalwert definiert ist, beruht auf Beziehungswissen zwischen dem Abschaltverhalten des elektrischen Verbrauchers und dem Verschleiß des Werkzeugs. Ist dieser Verschleiß bis zu einem bestimmten Grad fortgeschritten, dann zeigt sich dies in den von der Detektoreinheit 8 gelieferten Messwerten. Die Recheneinheit 4d erkennt den Fortschritt des Verschleißes und damit den bevorstehenden Ausfall des Werkzeugs, so dass rechtzeitig geeignete Gegenmaßnahmen ergriffen werden können.

Die Einspeicherung des Minimalwertes und des Maximalwertes für den zu überwachenden Parameter in den Datenbankspeicher 4d erfolgt mittels der Tastatur 4a der Prognostikeinheit 4.

Gemäß einer vorteilhaften Ausführungsform der Erfindung erfolgt auf dem Display 4b eine Anzeige von Diagrammen, in welchen der zeitliche Verlauf der dem jeweiligen Verbraucher entsprechenden Messwerte sowie der vorgegebene Minimalwert und der vorgegebene Maximalwert veranschaulicht sind, wie es bereits oben anhand der Figur 4 erläutert wurde.

Vorzugsweise werden die vom Konzentrator 5 über den Kommunikationskanal K zur Prognostikeinheit 4 übertragenen Messwerte in einem weiteren Speicherbereich des Datenbankspeichers 4c archiviert. Dadurch wird die Möglichkeit geschaffen, zu einem späteren Zeitpunkt bei Bedarf auf diese Messwerte zurückgreifen zu können.

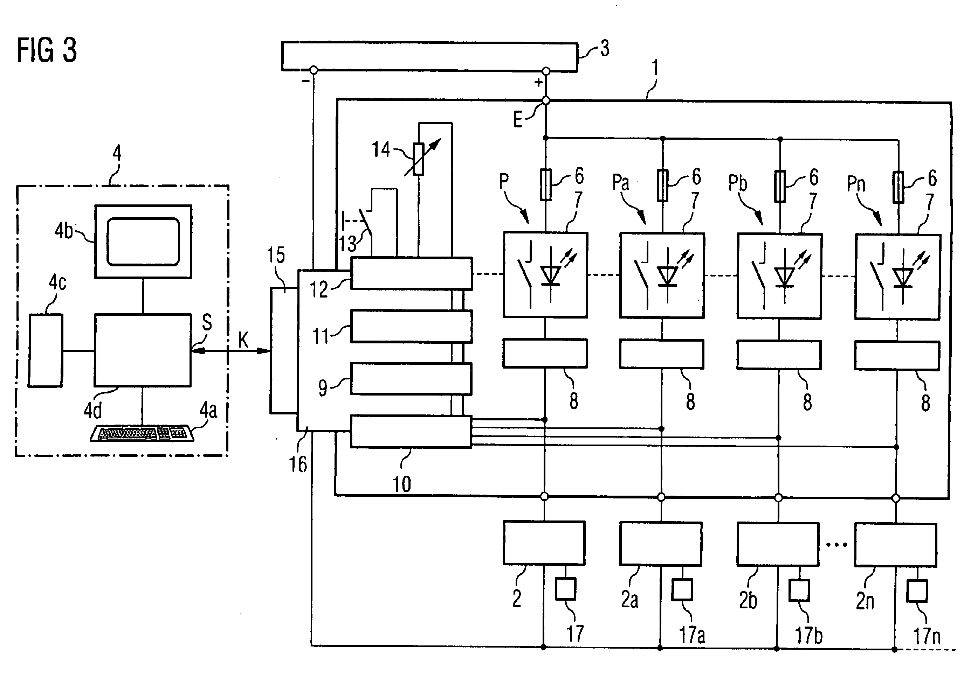

Die Figur 3 zeigt eine Skizze eines dritten Ausführungsbeispiels für eine Vorrichtung zur Ermittlung von Informationen über den Zustand eines elektrischen Verbrauchers und eines mit diesem verbundenen Werkzeugs. Gemäß diesem Ausführungsbeispiel ist eine mehrkanalige selbstlernende elektronische Sicherung 1 vorgesehen, die in den Versorgungspfaden von elektrischen Verbrauchern 2, 2a, 2b, ..., 2n zwischen einer Stromversorgung 3 und den genannten Verbrauchern angeordnet ist. Die Verbraucher sind jeweils mit einem Werkzeug 17, 17a, 17b, ..., 17n verbunden. Bei der Stromversorgung 3 handelt es sich um ein Netzgerät bzw. eine Gleichrichtereinheit, die an ihrem Ausgang die von den Verbrauchern benötigte Versorgungsgleichspannung zur Verfügung stellt. Diese wird über eine Plusleitung + und eine Masseleitung - an die selbstlernende elektronische Sicherung 1 und von dieser aus an die Verbraucher 2, ..., 2n weitergegeben. Zu diesem Zweck sind innerhalb der Sicherung 1 die Versorgungspfade P, ..., Pn vorgesehen. Der Versorgungspfad P ist an den Verbraucher 2 angeschlossen, der Versorgungspfad Pa an den Verbraucher 2a, der Versorgungspfad Pb an den Verbraucher 2b und der Versorgungspfad Pn an den Verbraucher 2n.

Die selbstlernende elektronische Sicherung 1 ist weiterhin über einen Kommunikationskanal K mit einer Prognostikeinheit 4 verbunden. Bei dieser handelt es sich um einen Personalcomputer, der eine Tastatur 4a, ein Display 4b, einen Datenbankspeicher 4c und eine Rechen- und Steuereinheit 4d aufweist. Die Prognostikeinheit 4 leitet aus ihr über den Kommunikationskanal K zugeleiteten Messwerten Daten ab, die Informationen über den Zustand der an die Sicherung 1 angeschlossenen elektrischen Verbraucher 2, 2a, 2b, ..., 2n und des jeweiligen Werkzeugs geben.

Die Sicherung 1 weist einen Eingang E auf, an dem die von der Stromversorgung 3 gelieferte positive Versorgungsgleichspannung anliegt. An diesen Eingang E ist eine Parallelschaltung der Versorgungspfade P, Pa, Pb, ..., Pn angeschlossen. Jeder dieser Versorgungspfade weist eine Reihenschaltung auf, die eine als Leitungsschutz dienende Schmelzsicherung 6, einen elektronischen Schalter 7 und eine Detektoreinheit 8 enthält. Der Ausgang der Detektoreinheit 8 ist mit einem jeweils zugehörigen Verbraucher 2, 2a, 2b, ..., 2n verbunden. Weiterhin sind die Ausgänge der Detektoreinheiten 8 an einen Multiplexer 10 angelegt. Dessen Ausgang ist mit einem Schaltungsblock 9 verbunden, der einen Analog-Digital-Wandler und einen n-fach-Speicher aufweist. Der n-fach-Speicher ist zur Zwischenspeicherung der Messwerte vorgesehen, die mittels der Detektoreinheiten 8 erfasst werden.

Der Ausgang des Schaltungsblockes 9 ist mit einem Schaltungsblock 11 verbunden, der eine Auswertelogik und einen weiteren Speicher aufweist. Dieser weitere Speicher ist zur Abspeicherung einer Auslösereferenz und weiterer Daten vorgesehen, die zur Ermittlung der Auslösereferenz und zur Beurteilung der Abweichung eines zu überwachenden Parameters notwendig sind. Dazu gehören beispielsweise die Informationen über Toleranzabstände, die Dauer eines Zeitfensters und einen momentan eingestellten Überwachungsmodus.

Mittels der Auswertelogik wird im Rahmen eines Selbstlernvorganges die Auslösereferenz ermittelt. Weiterhin dient die Auswertelogik dazu, die von den Detektoreinheiten 8 gelieferten Messdaten nach ihrer Digitalisierung mit der Auslösereferenz zu vergleichen und zu ermitteln, ob die Messdaten eine unzulässige Abweichung von der Auslösereferenz aufweisen. Ist das der Fall, dann generiert eine mit der Auswertelogik 11 verbundene Steuerlogik 12 ein Schaltsignal für den Schalter in demjenigen Versorgungspfad, in welchem die unzulässige Abweichung aufgetreten ist. Durch dieses Schaltsignal wird der genannte Schalter geöffnet und damit der Versorgungspfad unterbrochen. Die anderen Versorgungspfade, in denen keine unzulässigen Abweichungen des zu überwachenden Parameters von der Auslösereferenz vorliegen, bleiben durchlässig, so dass die daran angeschlossenen Verbraucher weiterhin stromversorgt werden.

Die in der Figur 3 dargestellte elektronische Sicherung 1 ist weiterhin mit einem Taster 13 versehen, mittels dessen der Selbstlernvorgang manuell aktivierbar ist. Weiterhin ist die in der Figur 3 gezeigte elektronische Sicherung 1 mit einem an die Steuerlogik 12 angeschlossenen einstellbaren Widerstand versehen, mittels dessen die Auslösecharakteristik des elektronischen Schalters 1 einstellbar ist.

Die in der Figur 3 dargestellte Auswerteelektronik 16, der die Schaltungsblöcke 9 - 12 angehören, ist vorzugsweise in Form eines Mikrocomputers realisiert, der in das Gehäuse der elektronischen Sicherung 1 eingebaut ist. Die Auswerteelektronik 16 steht über eine Schnittstelle 15 mit dem Kommunikationskanal K in Verbindung. Über diesen Kommunikationskanal K werden im Normalbetrieb der Anlage von den Detektoreinheiten 8 ermittelte Messwerte, die im n-fach-Messwertspeicher im Schaltungsblock 9 zwischengespeichert werden, an die Prognostikeinheit 4 übertragen.

Das von der Stromversorgung gelieferte Massesignal - ist mit den Masseanschlüssen der Verbraucher 2, 2a, 2b, ..., 2n verbunden.

Im Datenbankspeicher 4c der Prognostikeinheit 4 sind Referenzen abgespeichert, die die Notwendigkeit von Servicemaßnahmen betreffen. Bei diesen Referenzen handelt es sich beispielsweise um einen Minimalwert und einen Maximalwert für einen zu überwachenden Parameter. Die Recheneinheit 4d überprüft, ob die über den Kommunikationskanal K angelieferten Messwerte des zu überwachenden Parameters zwischen dem Minimalwert und dem Maximalwert liegen. Solange dies der Fall ist, arbeitet der jeweilige Verbraucher ordnungsgemäß und ist in gutem Zustand.

Verlassen hingegen die angelieferten Messwerte den durch den Minimalwert und den Maximalwert definierten Toleranzbereich, dann erkennt die Recheneinheit 4d, dass der jeweilige Verbraucher oder das daran angeschlossene Werkzeug aufgrund von Alterung und/oder Verschleiß reparatur- oder austauschbedürftig ist und signalisiert dies dem Servicepersonal durch eine alphanumerische oder grafische Anzeige auf dem Display 4b. Das Servicepersonal leitet als Reaktion auf diese Anzeige die erforderlichen Maßnahmen ein.

Der genannte Toleranzbereich, der durch den Minimalwert und den Maximalwert definiert ist, beruht auf Beziehungswissen zwischen dem Abschaltverhalten des elektrischen Verbrauchers und dem Verschleiß des jeweiligen Werkzeugs. Ist dieser Verschleiß bis zu einem bestimmten Grad fortgeschritten, dann zeigt sich dies in den von den Detektoreinheiten 8 gelieferten Messwerten. Die Recheneinheit 4d erkennt den Fortschritt des Verschleißes und damit den bevorstehenden Ausfall des jeweiligen Werkzeugs, so dass rechtzeitig geeignete Gegenmaßnahmen ergriffen werden können.

Die Einspeicherung des Minimalwertes und des Maximalwertes für den zu überwachenden Parameter in den Datenbankspeicher 4c erfolgt mittels der Tastatur 4a der Prognostikeinhit 4.

Gemäß einer vorteilhaften Ausführungsform der Erfindung erfolgt auf dem Display 4b eine Anzeige von Diagrammen, in welchen der zeitliche Verlauf der dem jeweiligen Verbraucher entsprechenden Messwerte sowie der vorgegebene Minimalwert und der vorgegebene Maximalwert veranschaulicht sind, wie es bereits oben anhand der Figur 4 erläutert wurde.

Vorzugsweise werden die über den Kommunikationskanal K zur Prognostikeinheit 4 übertragenen Messwerte in einem weiteren Speicherbereich des Datenbankspeichers 4c archiviert, um zu einem späteren Zeitpunkt bei Bedarf darauf zurückgreifen zu können.

Eine selbstlernende elektronische Sicherung, wie sie in den anhand der Figuren 1, 2 und 3 beschriebenen Ausführungsbeispielen enthalten ist, ist dazu vorgesehen, im Falle einer unzulässigen Abweichung eines zu überwachenden Parameters von einer Auslösereferenz auszulösen, d. h. den Versorgungspfad des Verbrauchers, in welchem die unzulässige Abweichung auftritt, zu unterbrechen. Um eine derartige unzulässige Abweichung zu erkennen, erfolgt mittels der jeweiligen Detektoreinheit 8 zunächst eine Erfassung des zu überwachenden Parameters. Der zu überwachende Parameter kann die elektrische Spannung, der Strom oder die Leistung sein.

Die von der Detektoreinheit 8 erfassten Werte werden innerhalb der Sicherung einer Auswerteelektronik zugeführt, die die erfassten Werte mit einer Auslösereferenz vergleicht. Bei dieser Auslösereferenz kann es sich um Eckwerte wie einen Maximalwert und/oder einen Minimalwert oder auch um eine Hüllkurve handeln.

Die Auslösereferenz wird von der elektronischen Sicherung im Rahmen eines Selbstlernvorgangs ermittelt. Dieser Selbstlernvorgang erfolgt innerhalb eines Messzeitfensters, welches von einem ersten Zeitpunkt bis zu einem zweiten Zeitpunkt reicht. Der Messvorgang wird entweder automatisch durch einen internen Triggerimpuls, einen externen Triggerimpuls von der Einheit 4 oder einen manuellen Bedienbefehl in die Wege geleitet. Die Länge des Messzeitfensters ist vorzugsweise einstellbar, wobei diese Einstellung entweder über die Einheit 4 oder über einen manuellen Bedienbefehl erfolgt.

Das Messzeitfenster ist so gelegt, dass der Messvorgang innerhalb eines Zeitraums erfolgt, in welchem die Anlage, innerhalb derer sich die Stromversorgung, die Sicherung und der bzw. die Verbraucher befinden, im ungestörten Normalbetrieb arbeiten. In diesem Zeitraum können und sollen durchaus Belastungsspitzen auftreten, die im späteren Überwachungsbetrieb aber nicht zu einem Auslösen der Sicherung führen sollen.

Die detektierten Messwerte werden der Auswerteelektronik zugeführt, die aus den detektierten Messwerten die Auslösereferenz ermittelt. Vorzugsweise geschieht dies unter Berücksichtigung eines Toleranzabstandes. Dient beispielsweise der Kurvenverlauf der Spannung als Auslösereferenz, dann wird im späteren Überwachungsbetrieb eine unzulässige Abweichung des zu überwachenden Parameters "Spannung" dann erkannt, wenn die gemessene Spannung außerhalb Hüllkurve liegt, die den Toleranzbereich repräsentiert.

Alternativ zu einer Hüllkurve können auch der im Messzeitfenster ermittelte Minimalwert und Maximalwert, vorzugsweise nach Berücksichtigung eines Toleranzabstandes, als Auslösereferenz verwendet werden. In diesem Fall wird im späteren Überwachungsbetrieb eine unzulässige Abweichung des zu überwachenden Parameters "Spannung" dann erkannt, wenn die gemessene Spannung entweder den ggf. mit einem Toleranzabstand beaufschlagten Maximalwert überschreitet oder den ggf. mit einem Toleranzabstand beaufschlagten Minimalwert unterschreitet.

Alternativ zur Hüllkurve oder dem Maximal- und Minimalwert kann auch das differentielle Verhalten dU/dt des zu überwachenden Parameters als Auslösereferenz verwendet werden. In diesem Fall wird im Messzeitfenster von der Auswerteelektronik eine Ermittlung des differentiellen Verhaltens des zu überwachenden Parameters durchgeführt und daraus zulässige Grenzwerte abgeleitet. Werden diese dann im späteren Überwachungsbetrieb überschritten, dann wird auf das Vorliegen einer unzulässigen Abweichung von der Auslösereferenz geschlossen und das Auslösen der elektronischen Sicherung herbeigeführt.

Gemäß der vorliegenden Erfindung werden die innerhalb der jeweiligen Sicherung von einer Detektoreinheit ermittelten Messwerte, die Auskunft über die Spannungsverhältnisse des jeweiligen Verbrauchers, über den durch den jeweiligen Verbraucher fließenden Strom oder über die vom jeweiligen Verbraucher aufgenommene Leistung geben, nicht nur zur Ermittlung einer Auslösereferenz und zur Ermittlung der Notwendigkeit einer Auslösung der Sicherung, sondern auch als Indikator für fällige Wartungsarbeiten oder einen notwendigen Austausch eines Verbrauchers oder eines mit diesem verbundenen mechanischen Werkzeugs, einer Vorrichtung oder Anlagenteils verwendet. Zu diesem Zweck werden die genannten Messwerte von der elektronischen Sicherung aus an eine Prognostikeinheit 4 übertragen, die die übertragenen Messwerte unter Verwendung von in einem Datenbankspeicher 4c abgespeicherten weiteren Referenzen auswertet. Die weiteren Referenzen, welche Beziehungswissen zwischen dem Abschaltverhalten eines elektrischen Verbrauchers und dem Verschleiß des jeweiligen Werkzeugs, der jeweiligen Vorrichtung oder des jeweiligen Anlagenteils berücksichtigen, betreffen die Notwendigkeit von Servicemaßnahmen. Durch einen Vergleich dieser weiteren Referenzen mit den angelieferten Messwerten oder daraus abgeleiteten Rechenwerten lässt sich die Notwendigkeit von Wartungsarbeiten oder ein bevorstehender Ausfall des jeweiligen Werkzeugs, der jeweiligen Vorrichtung oder des jeweiligen Anlagenteils prognostizieren, so dass die notwendigen Servicearbeiten rechtzeitig durchgeführt werden können.

Zu einer Übertragung der Messwerte an die Prognostikeinheit kann eine selbstlernende elektronische Sicherung beispielsweise folgende Schnittstellen aufweisen: eine Schnittstelle zu einem Bussystem, eine Schnittstelle zum Internet, eine GSM-Schnittstelle, eine UMTS-Schnittstelle, eine USB-Schnittstelle oder eine Funkschnittstelle. Ist die Sicherung mit der Prognostikeinheit über einen Bus verbunden, dann kann dies das Ethernet, ein Profibus, ein IEC-Bus oder ein CAN-Bus sein.

Bei dem in der Figur 2 gezeigten Ausführungsbeispiel kann die Kommunikation der Messwerte zwischen den Sicherungen 1 und 1a und dem Konzentrator 5 über einen Parameterbus in beliebiger Bustopologie erfolgen. Der Konzentrator 5 kann mit der Prognostikeinheit 4 über ein Bussystem kommunizieren, das unterschiedlich zum Parameterbus ausgeführt sein kann.

Bei der Prognostikeinheit 4 kann es sich alternativ zu einem Personalcomputer auch um ein Programmiergerät, um eine speicherprogrammierbare Steuerung oder um eine Fernsteuerungseinheit handeln.

Die Prognostikeinheit 4 kann als übergeordnete Steuerung für die selbstlernenden Sicherungen arbeiten und diesen bei Bedarf Abschaltcharakteristiken und/oder veränderte Referenzwerte zur Verfügung stellen. In diesem Fall dient die Prognostikeinheit 4 auch als externer Datenmanager für die vorhandenen selbstlernenden Sicherungen.

Der Datenbankspeicher 4c der Prognostikeinheit 4 kann Referenzen in Form von Einzelwerten wie Minimal- und Maximalwerten oder in Form von Kurvenverläufen enthalten.

Es können im Datenbankspeicher 4c auch je Sicherung und Kanal mehrere Referenzen abgespeichert sein. Eine erste dieser Referenzen kann einen Vorwarnbereich charakterisieren, eine weitere dieser Referenzen die unbedingte Notwendigkeit eines Bauteilaustausches kennzeichnen.

Im Datenbankspeicher 4c können weiterhin Abschaltcharakteristiken abgespeichert sein. Dabei kann es sich um absolute Abschaltcharakteristiken handeln oder um normierte Abschaltcharakteristiken. Eine Verwendung von normierten Werten hat den Vorteil, dass die Abschaltstrategie im Falle eines Austausches von Bauteilen innerhalb eines Systems erhalten bleibt und beliebig oft dupliziert werden kann.

Weiterhin können im Datenbankspeicher 4c auch Anlagetopologien berücksichtigt werden und in diesem Zusammenhang Anlagenkennzeichen, Schrankkennzeichen, Zweigkennzeichen und Gerätekennzeichen abgespeichert sein.

Das Auslesen der Messwerte aus den jeweils vorhandenen elektronischen Sicherungen kann zyklisch, zu definierten Zeitpunkten oder manuell getriggert erfolgen.

## Patentansprüche

1. Vorrichtung zur Ermittlung von Informationen über den Zustand eines elektrischen Verbrauchers, mit einer Stromversorgung und einer an die Stromversorgung angeschlossenen elektronischen Sicherung, an welche der Verbraucher angeschlossen ist, wobei
- die elektronische Sicherung einen Eingang (E) aufweist, der mit einem Ausgang der Stromversorgung verbunden ist,
- die elektronische Sicherung einen Versorgungspfad (P, Pa, Pb, ...,Pn) aufweist, der zwischen dem Eingang (E) und einem Versorgungsausgang (A) der elektronischen Sicherung verläuft, und
- im Versorgungspfad eine Detektoreinheit (8) vorgesehen ist, die Messwerte zur Verfügung stellt,
wobei die elektronische Sicherung (1) über einen Kommunikationskanal (K) mit einer Prognostikeinheit (4) verbunden ist, welche unter Verwendung der von der Detektoreinheit (8) ermittelten Messwerte Daten ableitet, die Informationen über den Zustand des an den Versorgungsausgang der elektronischen Sicherung angeschlossenen elektrischen Verbrauchers und/oder an den Verbraucher angeschlossener Werkzeuge, Vorrichtungen oder Anlagenteile geben, **dadurch gekennzeichnet, dass** die elektronische Sicherung eine selbstlernende elektronische Sicherung ist, die aus den detektierten Messwerten eine Auslösereferenz selbst entwickelt.

2. Vorrichtung nach Anspruch 1, **dadurch gekennzeichnet, dass** die elektronische Sicherung einen mit der Detektoreinheit (8) verbundenen Messwertspeicher (9) aufweist und der Prognostikeinheit (4) aus dem Messwertspeicher abgeleitete Messwerte zur Verfügung gestellt werden.

3. Vorrichtung nach einem der vorhergehenden Ansprüche, **dadurch gekennzeichnet, dass** sie mehrere elektronische Sicherungen aufweist, die mit einem Konzentrator (5) verbunden sind, und dass die Prognostikeinheit (4) an den Konzentrator (5) angeschlossen ist.

4. Vorrichtung nach einem der vorhergehenden Ansprüche, **dadurch gekennzeichnet, dass** die Prognostikeinheit ein Personalcomputer, ein Programmiergerät, eine speicherprogrammierbare Steuerung oder eine Fernsteuerungseinheit ist.

5. Vorrichtung nach einem der vorhergehenden Ansprüche, **dadurch gekennzeichnet, dass** die Prognostikeinheit einen Datenbankspeicher (4c) aufweist.

6. Vorrichtung nach Anspruch 5, **dadurch gekennzeichnet, dass** der Datenbankspeicher (4c) einen Speicherbereich aufweist, in welchem mindestens eine Auslösereferenz abgespeichert ist.

7. Vorrichtung nach Anspruch 5 oder 6, **dadurchgekennzeichnet, dass** der Datenbankspeicher (4c) einen Speicherbereich aufweist, in welchem mindestens eine Abschaltcharakteristik abgespeichert ist.

8. Vorrichtung nach einem der Ansprüche 5 - 7, **dadurch gekennzeichnet, dass** der Datenbankspeicher (4c) einen Speicherbereich aufweist, in welchem Informationen über Anlagentopologien abgespeichert sind.

9. Vorrichtung nach einem der Ansprüche 5 - 8, **dadurch gekennzeichnet, dass** der Datenbankspeicher (4c) einen Speicherbereich aufweist, in welchem Beziehungswissen zwischen dem Abschaltverhalten eines elektrischen Verbrauchers und dem Verschleiß eines an den Verbraucher angeschlossenen Werkzeugs, einer an den Verbraucher angeschlossenen Vorrichtung oder eines an den Verbraucher angeschlossenen Anlagenteils abgespeichert ist.

10. Vorrichtung nach einem der Ansprüche 5 - 9, **dadurch gekennzeichnet, dass** der Datenbankspeicher (4c) einen Speicherbereich aufweist, in welchem Referenzen abgespeichert sind, die die Notwendigkeit von Servicemaßnahmen betreffen.

11. Vorrichtung nach einem der vorhergehenden Ansprüche, **dadurch gekennzeichnet, dass** die Prognostikeinheit (4) eine Recheneinheit (4d) aufweist, die zu einem Vergleich der Messwerte mit abgespeicherten Referenzen vorgesehen ist.

12. Vorrichtung nach Anspruch 11, **dadurch gekennzeichnet, dass** die Prognostikeinheit (4) ein Display (4b) aufweist, auf welchem die Messwerte und die Referenzen und/oder die Ergebnisse des Vergleiches visualisierbar sind.

13. Vorrichtung nach Anspruch 12, **dadurch gekennzeichnet, dass** das Display (4b) zur alphanumerischen oder grafischen Anzeige von durchzuführenden Servicemaßnahmen dient.

14. Vorrichtung nach Anspruch 12 oder 13, **dadurch gekennzeichnet, dass** das Display zur Anzeige eines bevorstehenden Ausfalls eines an einen Verbraucher angeschlossenen Werkzeugs, einer an einen Verbraucher angeschlossenen Vorrichtung oder eines an einen Verbraucher angeschlossenen Anlagenteils dient.

## Claims

1. Apparatus for deriving information about the condition of an electrical load, comprising a power supply and an electronic fuse which is connected to the power supply and to which the load is connected, wherein
- the electronic fuse has an input (E) which is connected to an output of the power supply,
- the electronic fuse has a supply path (P, Pa, Pb, ...,Pn) which runs between the input (E) and a supply output (A) of the electronic fuse, and
- a detector unit (8) which makes measured values available is provided in the supply path,
wherein the electronic fuse (1) is connected via a communication channel (K) to a predictive unit (4) which uses the measured values captured by the detector unit (8) to derive data which provides information about the condition of the electrical load connected to the supply output of the electronic fuse and/or tools, apparatuses or system components connected to the load, **characterised in that** the electronic fuse is a self-learning electronic fuse which autonomously develops a trigger reference from the detected measured values.

2. Apparatus according to claim 1, **characterised in that** the electronic fuse has a measured value memory (9) which is connected to the detector unit (8) and the predictive unit (4) is provided with measured values derived from the measured value memory.

3. Apparatus according to one of the preceding claims, **characterised in that** it has a plurality of electronic fuses which are connected to a concentrator (5), and **in that** the predictive unit (4) is connected to the concentrator (5).

4. Apparatus according to one of the preceding claims, **characterised in that** the predictive unit is a personal computer, a programming device, a programmable logic controller or a remote control unit.

5. Apparatus according to one of the preceding claims, **characterised in that** the predictive unit has a database memory (4c).

6. Apparatus according to claim 5, **characterised in that** the database memory (4c) has a memory area in which at least one trigger reference is stored.

7. Apparatus according to claim 5 or 6, **characterised in that** the database memory (4c) has a memory area in which at least one disconnection characteristic is stored.

8. Apparatus according to one of claims 5 - 7, **characterised in that** the database memory (4c) has a memory area in which is stored information concerning system topologies.

9. Apparatus according to one of claims 5 - 8, **characterised in that** the database memory (4c) has a memory area in which is stored knowledge concerning the relationship between the disconnection characteristics of an electrical load and the wear and tear of a tool, an apparatus or a system component connected to the load.

10. Apparatus according to one of claims 5 - 9, **characterised in that** the database memory (4c) has a memory area in which references are stored that relate to the need for service measures.

11. Apparatus according to one of the preceding claims, **characterised in that** the predictive unit (4) has a computing unit (4d) which is provided for comparison of the measured values with stored references.

12. Apparatus according to claim 11, **characterised in that** the predictive unit (4) has a display (4b) on which the measured values and the references and/or the results of the comparison can be visualised.

13. Apparatus according to claim 12, **characterised in that** the display (4b) serves for providing an alphanumeric or graphical display of service measures requiring to be performed.

14. Apparatus according to claim 12 or 13, **characterised in that** the display serves for signalling an imminent failure of a tool, apparatus or system component connected to a load.

## Revendications

1. Dispositif fournissant de l'information sur l'état d'un consommateur électrique, comprenant une alimentation en courant et un coupe-circuit électronique, qui est raccordé à l'alimentation en courant et auquel le consommateur est raccordé, dans lequel
- le coupe-circuit électronique a une entrée ( E ), qui est reliée à une sortie de l'alimentation en courant,
- le coupe-circuit électronique a un trajet ( P, Pa, Pb, ..., Pn ) d'alimentation, qui s'étend entre l'entrée ( E ) et une sortie ( A ) d'alimentation du coupe-circuit électronique, et
- il est prévu dans le trajet d'alimentation une unité ( 8 ) formant détecteur, qui met à disposition des valeurs de mesure,
dans lequel le coupe-circuit ( 1 ) électronique est relié par l'intermédiaire d'un canal ( K ) de communication à une unité ( 4 ) de pronostic qui, en utilisant les valeurs de mesure déterminées par l'unité ( 8 ) formant détecteur, déduit des données, qui donnent des informations sur l'état du consommateur électrique raccordé à la sortie d'alimentation du coupe-circuit électronique et/ou d'outils, de dispositifs ou de parties d'installation raccordés au consommateur, **caractérisé en ce que** le coupe-circuit électronique est un coupe-circuit électronique à auto-apprentissage, qui développe de soi-même une référence de déclenchement à partir des valeurs de mesure détectées.

2. Dispositif suivant la revendication 1, **caractérisé en ce que** le coupe-circuit électronique a une mémoire ( 9 ) de valeurs de mesure, qui est reliée à l'unité ( 8 ) formant détecteur et l'unité ( 4 ) de pronostic met à disposition des valeurs de mesure provenant de la mémoire de valeurs de mesure.

3. Dispositif suivant l'une des revendications précédentes, **caractérisé en ce qu'**il a plusieurs coupe-circuits électroniques, qui sont reliés à un concentrateur ( 5 ) et **en ce que** l'unité ( 4 ) de pronostic est raccordée au concentrateur ( 5 ).

4. Dispositif suivant l'une des revendications précédentes, **caractérisé en ce que** l'unité de pronostic est un ordinateur personnel, un appareil de programmation, un automate programmable ou une unité de télécommande.

5. Dispositif suivant l'une des revendications précédentes, **caractérisé en ce que** l'unité de pronostic a une mémoire ( 4c ) de base de données.

6. Dispositif suivant la revendication 5, **caractérisé en ce que** la mémoire ( 4c ) de base de données a une partie de mémoire dans laquelle est mémorisée au moins une référence de déclenchement.

7. Dispositif suivant la revendication 5 ou 6, **caractérisé en ce que** la mémoire ( 4c ) de base de données a une partie de mémoire dans laquelle est mémorisée au moins une caractéristique d'arrêt.

8. Dispositif suivant l'une des revendications 5 à 7, **caractérisé en ce que** la mémoire ( 4c ) de base de données a une partie de mémoire dans laquelle sont mémorisées des informations sur des topologies d'installation.

9. Dispositif suivant l'une des revendications 5 à 8, **caractérisé en ce que** la mémoire ( 4c ) de base de données a une partie de mémoire dans laquelle sont mémorisés des savoirs sur les relations entre le comportement à l'arrêt d'un consommateur électrique et l'usure d'un outil raccordé au consommateur, d'un dispositif raccordé au consommateur ou d'une partie d'installation raccordée au consommateur.

10. Dispositif suivant l'une des revendications 5 à 9, **caractérisé en ce que** la mémoire ( 4c ) de base de données a une partie de mémoire dans laquelle sont mémorisées des références, qui concernent la nécessité de prendre des mesures de service.

11. Dispositif suivant l'une des revendications précédentes, **caractérisé en ce que** l'unité ( 4 ) de pronostic a une unité ( 4d ) de calcul, qui est prévue pour comparer les valeurs de mesure à des références mémorisées.

12. Dispositif suivant la revendication 11, **caractérisé en ce que** l'unité ( 4 ) de pronostic a un affichage ( 4b ) sur lequel peuvent être visualisés les valeurs de mesure et les références et/ou les résultats de la comparaison.

13. Dispositif suivant la revendication 12, **caractérisé en ce que** l'affichage ( 4b ) sert à l'affichage alphanumérique ou graphique de mesures de service qui sont prises.

14. Dispositif suivant la revendication 12 ou 13, **caractérisé en ce que** l'affichage sert à afficher une panne imminente d'un outil raccordé à un consommateur, d'un dispositif raccordé à un consommateur ou d'une partie de l'installation raccordée à un consommateur.
